# EUROPÄISCHE PATENTSCHRIFT

(11) **EP 2 357 287 B1**
(45) Veröffentlichungstag und Bekanntmachung des Hinweises auf die Patenterteilung: **18.12.2013**
(21) Anmeldenummer: 11000539.4
(22) Anmeldetag: 24.01.2011
(51) Int. Cl.: E02F 3/96, E02F 9/02, E02F 3/38, E02F 5/02, A01D 34/86, E01H 1/00, A01G 3/04, E02F 5/28, F15B 15/16

(54) **Arbeitsfahrzeug mit zumindest einem Anbaurahmen**
Work vehicle with at least one attachable frame
Véhicule de travail doté d'au moins un cadre de montage

(30) Priorität: 15.02.2010 DE 102010008113
(43) Veröffentlichungstag der Anmeldung: 17.08.2011
(73) Patentinhaber: Gerhard Dücker GmbH & Co. KG Landmaschinenfabrik, 48703 Stadtlohn (DE)
(72) Erfinder: Dücker, Gerhard, 48703 Stadtlohn (DE)
(74) Vertreter: Busse, Harald F.W.

(56) Entgegenhaltungen:
- EP-A2- 2 071 085
- WO-A1-2009/029966
- DE-A1- 10 061 853
- DE-A1- 10 221 417
- GB-A- 2 202 122
- US-A- 2 847 134
- US-A- 3 605 392

## Beschreibung

Die Erfindung betrifft ein Arbeitsfahrzeug mit zumindest einem front- und/oder heckseitigen Anbaurahmen, an dem zumindest ein Arbeitswerkzeug, insbesondere ein seitlich ausgreifbares Arbeitswerkzeug, halterbar ist, wobei der Anbaurahmen eine untere, gegenüber einem Fahrwerk des Fahrzeugs halterbare und eine obere, gegenüber einer Tragstruktur des Fahrzeugs halterbare Ebene aufweist, nach dem Oberbegriff des Anspruchs 1.

Es ist bekannt, Anbaurahmen vorzusehen, die ihrerseits große und schwere Arbeitswerkzeuge tragen können, insbesondere solche, die mit Mäh- und/oder Schneidköpfen versehen sind und seitlich ausgreifen können.

Um einerseits während der Fahrt ein Federn dieses Anbaurahmens mit dem Fahrzeugaufbau gegenüber dem Fahrwerk zu ermöglichen und andererseits zu verhindern, daß der Fahrzeugaufbau im Einsatz des Arbeitswerkzeugs eine zu große Schräglage einnimmt, ist es bekannt, den Anbaurahmen in einer unteren Ebene am Fahrwerk des Fahrzeugs und in einer oberen Ebene an einer mit dem Fahrzeugaufbau verbundenen Tragstruktur des Fahrzeugs zu halten, wobei die obere und die untere Ebene gegeneinander an einem festen Drehpunkt gehalten und über einen seitlich neben beabstandet zu diesem Drehpunkt stehenden Stellzylinder in ihrer Beweglichkeit gegeneinander blockierbar sind. Durch diese Blockierung wird eine zu große Schräglage des Aufbaus verhindert, während in einer freien Schwimmstellung des Stellzylinders das o. g. Mitfedern ermöglicht ist.

Dabei wird herkömmlich der Stellzylinder bei stehendem Fahrzeug blockiert, so daß die obere Ebene gegenüber der unteren in eine parallele Stellung verbracht wird und der Aufbau ohne Krängung auf dem Fahrwerk steht. Bei einem anschließenden Ausschwenken des Arbeitswerkzeugs kommt es jedoch durch die hohe einseitige Belastung schon aufgrund der Toleranzen in den Lagern und dem Zylinder zu einem Nachgeben, so daß der Aufbau dennoch in eine Schrägstellung gegenüber dem Fahrwerk gerät.

Die US-A-3,605,392 zeigt ein Arbeitsfahrzeug mit einem Anbaurahmen, wobei die untere Ebene und die obere Ebene beide gegenüber dem Fahrzeugaufbau fest sind. Er weist somit nicht eine gegenüber dem Aufbau und eine gegenüber dem Fahrwerk halterbare Ebene auf, sondern lediglich zwei gegenüber dem Aufbau feste Ebenen des Rahmens.

Die GB-A-2202122 zeigt ein Arbeitsfahrzeug mit einem heckseitigen Anbaurahmen, der in sich geschlossen ist. Eine obere und eine untere Ebene stehen fest zueinander und sind nicht gegeneinander verkippbar. Das Fahrzeug weist somit nicht eine gegenüber dem Aufbau und eine gegenüber dem Fahrwerk halterbare Ebene des Anbaurahmens auf.

Die DE 100 61 853 A1 zeigt ein Arbeitsfahrzeug mit einem Werkzeugträgergestell, das dort am Fahrzeugchassis angeordnet ist. Ein oberer Rahmenteil, der am Aufbau des Fahrzeugs angeordnet wäre, fehlt daher auch hier vollständig.

Die EP-A-2071085 zeigt in zentraler Anordnung (gleichwertig für Vor- und Rückwärtsfahrt) eine Halterung mit mehreren, gegeneinander bewegbaren Ebenen für den gesamten Aufbau (inkl. Fahrerhaus, Antriebseinheit, Karosserie) gegenüber der Fahrwerksebene. Diese ist - ähnlich einer kardanischen Aufhängung - um zwei Achsen kippbar. Dabei soll eine Kompensation von Schrägstellungen des Aufbaus durch Stellzylinder stattfinden. Das heißt, wenn der Aufbau durch das Ausfahren des Arbeitswerkzeugs in eine Schrägstellung gelangt, werden die Stellzylinder aktiv gegensteuern und den Aufbau wieder in eine Horizontalstellung überführen. Es ist daher eine aufwendige Sensorik mit zumindest einem Aktuator vorzusehen, so daß sich ein konstruktiv und hinsichtlich seiner Kalibrierung aufwendiger Mechanismus ergibt.

Der Erfindung liegt das Problem zugrunde, auch bei großer einseitiger Belastung des Fahrzeugs mit geringem Aufwand eine achsparallele Ausrichtung des Fahrzeugaufbaus zu erreichen.

Die Erfindung löst dieses Problem durch ein Arbeitsfahrzeug mit den Merkmalen des Anspruchs 1 sowie durch ein Verfahren mit den Merkmalen des Anspruchs 11. Hinsichtlich weiterer Ausgestaltungen der Erfindung wird auf die abhängigen Ansprüche 2 bis 10 verwiesen.

Durch das erfindungsgemäße Arbeitsfahrzeug nach Anspruch 1 wie auch durch das erfindungsgemäße Verfahren ist erreicht, daß selbst bei einem seitlich weit ausgreifenden und schweren Arbeitswerkzeug eine horizontale Lage des Arbeitsfahrzeugs bezüglich seiner Längsachse erreichbar ist. Die Vorspannung, die zunächst ein leichtes Überkippen des Fahrzeugs entgegen der Auslagerichtung des Arbeitswerkzeugs bewirkt, kann dabei durch die Auslage des Arbeitswerkzeugs und die daraus resultierende Belastung ausgeglichen werden, so daß das Fahrzeug dann wieder in Arbeitsstellung in eine horizontale Stellung gelangt. Unter horizontaler Stellung wird hier verstanden, daß nur eine minimale Abweichung von zumeist deutlich unter 1° gegenüber der Straßenoberfläche erreicht wird.

Sofern in überkippter Position die obere Ebene gegenüber der unteren Ebene um höchstens 3° verkippt ist, ist sichergestellt, daß zu keinem Zeitpunkt eine für den Fahrer unangenehm hohe Aufbauneigung resultiert und diese Neigung schon durch geringe Toleranzen in den Gelenken zum Beispiel des Riegels und durch Torsion im Material ausgeglichen werden kann, so daß dann wieder die "vollständig" horizontale Lage des Aufbaus erreichbar ist.

Wenn die obere und die untere Ebene über einen Riegel und nur einen seitlich neben diesen beabstandet stehenden Stellzylinder gegeneinander bewegbar bzw. in ihrer Beweglichkeit gegeneinander blockierbar sind, ist der Aufbau sowohl konstruktiv als auch steuerungstechnisch mit dem nur einen Zylinder sehr einfach und kostengünstig. Eine Lösung mit zwei Stellzylindern zum Neigungsausgleich ist dann entbehrlich.

Weiterhin kann sehr günstig die Höhenlage des festen Drehpunkts einstellbar sein, um damit eine Anpassung an verschieden schwere und/oder verschieden weit ausgreifende Arbeitswerkzeuge zu ermöglichen und trotz des Anbaus verschiedener Arbeitswerkzeuge stets die horizontale Endlage bei ausgeschwenktem Arbeitswerkzeug erreicht werden kann.

Beispielsweise kann hierfür die obere Anlenkung des Riegels den Drehpunkt der oberen gegen die untere Ebene bildet und der Riegel ein Spannschloß oder eine ähnliche Längenverstellmöglichkeit enthalten. Diese kann zum Beispiel auch manuell einstellbar sein.

Wenn ein Kolben des Stellzylinders über eine mittlere Stellung hinaus in eine Verriegelungsstellung bewegbar ist, beispielsweise eine Anschlagstellung, kann der Stellzylinder über diese mittlere Stellung hinaus mit der gewünschten Vorspannung und dem daraus resultierenden Verkippen des Aufbaus beaufschlagt werden. Besonders günstig ist dabei jeweils ein Kolben des Stellzylinders in Druck- wie in Zugrichtung über die mittlere Stellung hinaus bewegbar, so daß die Ebene der Tragstruktur gegenüber der Fahrwerksebene in zwei Schwenksinnen leicht überkippbar ist. Damit kann der Zylinder gegenüber einer mittleren Stellung verkürzt oder verlängert werden, so daß er eine Vorspannung gegenüber einer Auslage des Arbeitswerkzeugs zu beiden Fahrzeugseiten bilden kann.

Günstig enthält der Stellzylinder zwei Kolben, die jeweils gegen einen dazwischen liegenden, beweglichen Anschlag fahrbar sind und somit einerseits die Vorspannung über die mittlere Lage in beiden genannten Sinnen ermöglichen, andererseits ist durch die festen Anschläge diese Vorspannung auch zwangsweise begrenzt.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine Ansicht eines beispielhaften, erfindungsgemäß ausgebildetes Arbeitsfahrzeugs in Transportstellung eines hier frontseitigen Arbeitswerkzeugs, wobei der Aufbau des Arbeitsfahrzeugs gegenüber dem Fahrgestell entgegen der Auslagerichtung des Arbeitswerkzeugs überkippt ist,
- Fig. 2: eine ähnliche Ansicht wie Fig. 1, jedoch bei seitlich ausgelegtem Arbeitswerkzeug und daraus resultierender einseitiger Belastung, die den Fahrzeugaufbau in horizontale Stellung gegenüber dem Fahrwerk bringt,

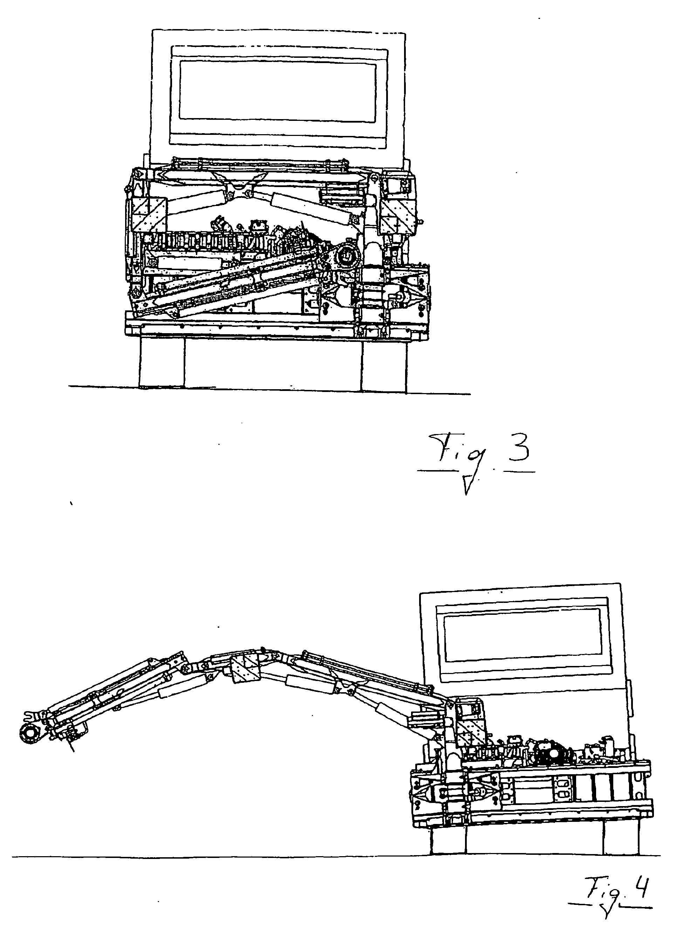

- Fig. 3: eine ähnliche Ansicht wie Figur 1, jedoch eines Arbeitsfahrzeugs gemäß dem Stand der Technik, wobei der Aufbau des Arbeitsfahrzeugs gegenüber dem Fahrgestell horizontal ausgerichtet ist,
- Fig. 4: eine ähnliche Ansicht des Fahrzeugs nach dem Stand der Technik wie in Fig. 3, jedoch bei seitlich ausgelegte Arbeitswerkzeug und daraus resultierender einseitiger Belastung, die den Fahrzeugaufbau in eine verkippte Schrägstellung gegenüber dem Fahrwerk bringt,
- Fig. 5: einen mit dem Fahrwerk verbindbaren Stützbereich des Anbaurahmens für ein Fahrzeug gemäß Figur 1 in perspektivischer Ansicht von schräg vorne links,
- Fig. 6: den Stützbereich des Anbaurahmens in perspektivischer Ansicht von schräg vorne rechts,
- Fig. 7: den Stellzylinder aus dem Anbaurahmen in Figur 6 in einer unbeaufschlagten Schwimmstellung zum Entsper- ren von Fahrwerk und Fahrzeugaufbau für den Fahrbetrieb,
- Fig. 8: den Stellzylinder in einer am rechten Ende mit Öl beaufschlagten Stellung zu seinem Ausfahren in eine den Fahrzeugaufbau nach rechts verkippende Stellung zum Entgegenwirken einer Auslage des Arbeitswerkzeugs nach links (jeweils bezüglich der Fahrtrichtung),
- Fig. 9: den Stellzylinder in einer am linken Ende mit Öl beaufschlagten Stellung zu seinem Einfahren in eine den Fahrzeugaufbau nach links verkippende Stellung gemäß Figur 1 zum Entgegenwirken einer Auslage des Arbeitswerkzeugs nach rechts gemäß Figur 2 (jeweils bezüglich der Fahrtrichtung),

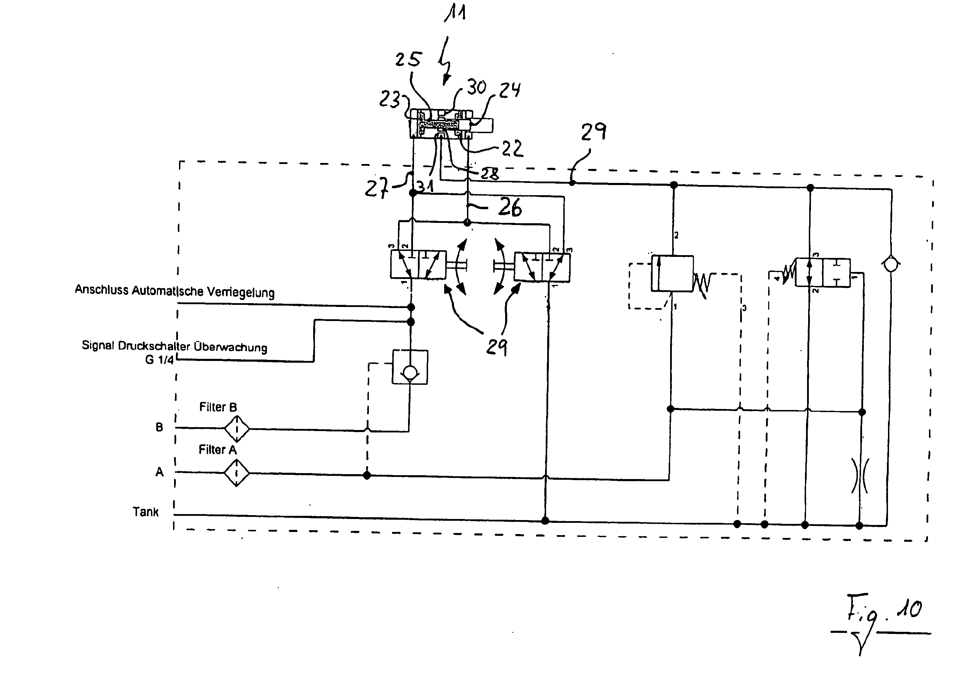

- Fig. 10: einen möglichen Hydraulikschaltplan zur Beaufschlagung des Stellzylinders.

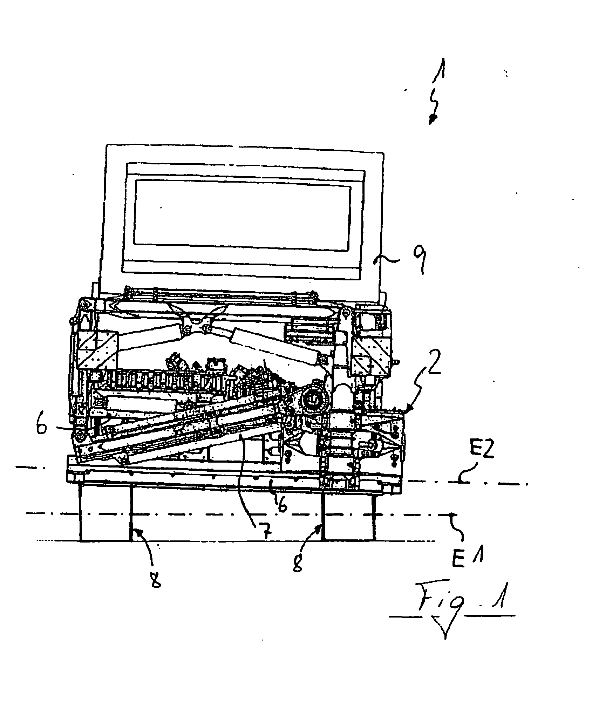

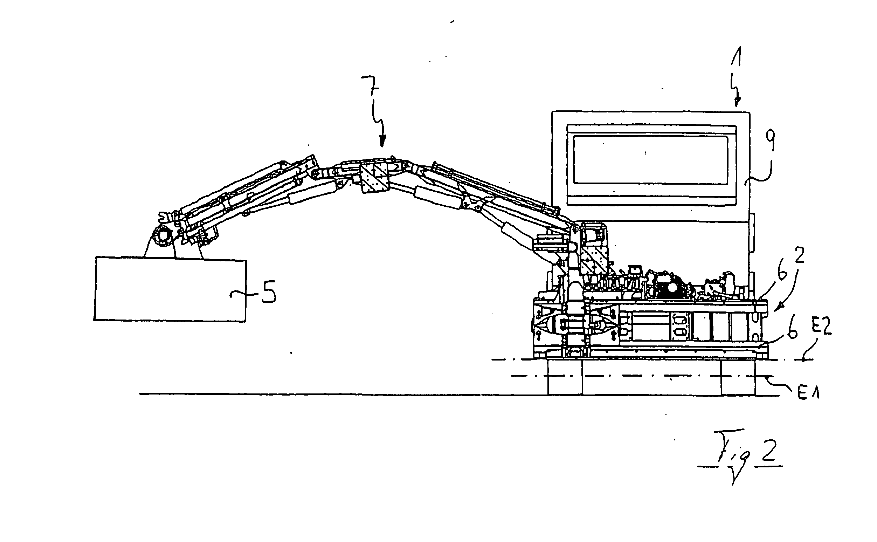

Das in Figur 1 dargestellte und insgesamt mit 1 bezeichnete Arbeitsfahrzeug bildet hier ein selbstfahrendes Fahrzeug aus, was nicht zwingend ist. An das Arbeitsfahrzeug 1 ist zumindest ein front- oder heckseitiger Anbaurahmen 2 anmontiert, der einen unteren Stützbereich 3 für seine Halterung am Fahrzeug und einen Tragbereich 4 für zumindest ein Arbeitswerkzeug 5 umfaßt. Der Tragbereich 4 umfaßt hier mehrere quer verlaufende Führungsschienen 6, an denen ein Ausleger 7 für das Arbeitswerkzeug 5 verschieblich halterbar ist. Der Ausleger 7 kann höhen- und winkelverstellbar sein und insbesondere auch zu beiden Seiten ausgelegt werden. In Figur 2 ist seine Auslage nach rechts (bezüglich der Fahrtrichtung F) gezeigt.

Das hier nur schematisch dargestellte Arbeitswerkzeug 5 kann beispielsweise als Mäh-, Schneid- oder Fräskopf oder als Räum- oder Reinigungskopf ausgebildet sein. Hier ist beispielhaft ein Arbeitswerkzeug 5 als Mähkopf ausgebildet und mit Schneid- und/oder Schlagmitteln an einer oder mehreren horizontal rotierenden Schneid- oder Schlagwalzen versehen.

Das Arbeitsfahrzeug 1 kann als Schmalspurtraktor ausgebildet sein, um damit einen flexiblen Einsatz auch in engen Bereichen zu ermöglichen. Auch größere, LKW-ähnliche Fahrzeuge sind möglich.

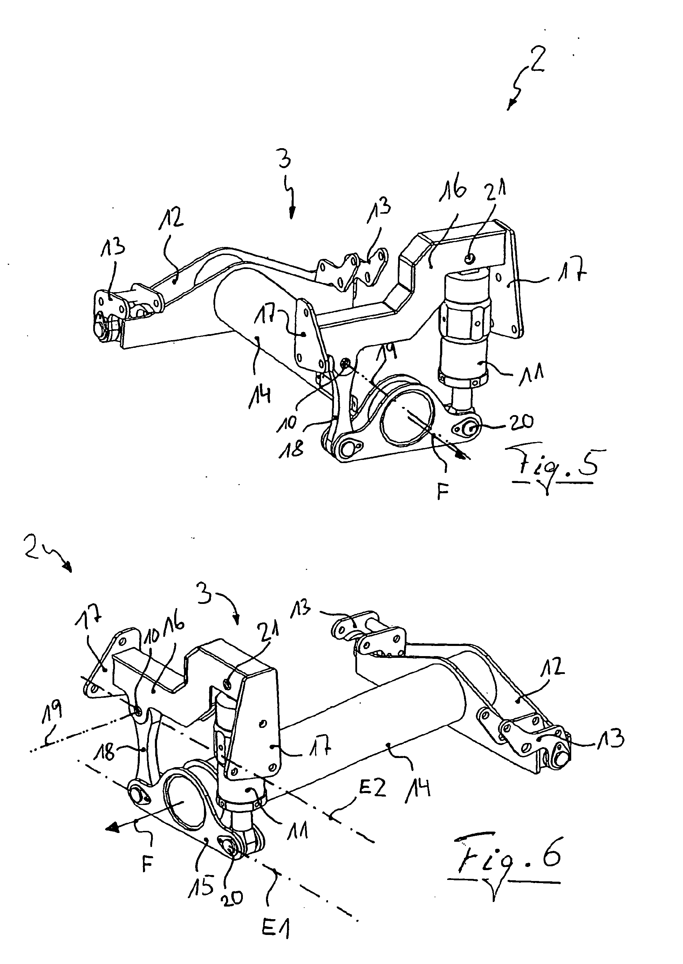

Der Anbaurahmen 2 weist, wie etwa in den Figuren 5 und 6 deutlich wird, eine untere, gegenüber einem Fahrwerk 8 des Fahrzeugs 1 halterbare Ebene E1 und eine obere, gegenüber einer Tragstruktur des Fahrzeugaufbaus 9 halterbare Ebene E2 auf. Die obere und die untere Ebene E2, E1 sind gegeneinander an einem festen Drehpunkt 10 gehalten und über einen seitlich beabstandet zu diesem Drehpunkt 10 stehenden Stellzylinder 11 in ihrer Beweglichkeit gegeneinander freigebbar oder blockierbar.

Zu seiner Anbindung am Fahrwerk 8 - hier an der Vorderachse - umfaßt der Anbaurahmen 2 in seinem Stützbereich einen bezüglich der Fahrtrichtung F hinteren Querträger 12, der über Flansche 13 fest mit der Vorderachse verbindbar ist. Von diesem Querträger 12 erstreckt sich in Fahrtrichtung ein Torsionsrohr 14 zu einem vorderen, unteren Querträger 15, der in der unteren Ebene E1 liegt.

Dieser ist über den aufragenden Stellzylinder 11 und einen mit Abstand und zumindest nahezu parallel hierzu gelegenen Riegel 18 mit einem oberen Querträger 16 verbunden, der ungefähr in der Ebene E2 gelegen ist und über seitliche Flansche 17 den Tragbereich 4 mit den quer verlaufenden Führungsschienen 6 abstützt. Eine obere Lagerung des Riegels 18 definiert dabei einen Drehpunkt mit einer in Längsrichtung des Fahrzeugs 1 liegenden Drehachse 19, um die herum die Ebene E2 mit dem daran angebundenen Fahrzeugaufbau gegenüber der Fahrwerksebene E1 um die Achse 19 verkippbar ist.

Dabei kann die Höhenlage des Drehpunkts 10 einstellbar sein, zum Beispiel dadurch, daß der Riegel 18 ein Spannschloß oder eine ähnliche Längenverstellmöglichkeit enthält - hier nicht gezeichnet- und darüber der Drehpunkt 10 als obere Anlenkung des Riegels 18 gegenüber der unteren Ebene E1 feinjustiert werden kann.

Der Stellzylinder 11 ist an einer unteren Lagerstelle 20 am unteren Querträger 15 und an einer oberen Lagerstelle 21 an dem oberen Querträger 16 beweglich gehalten.

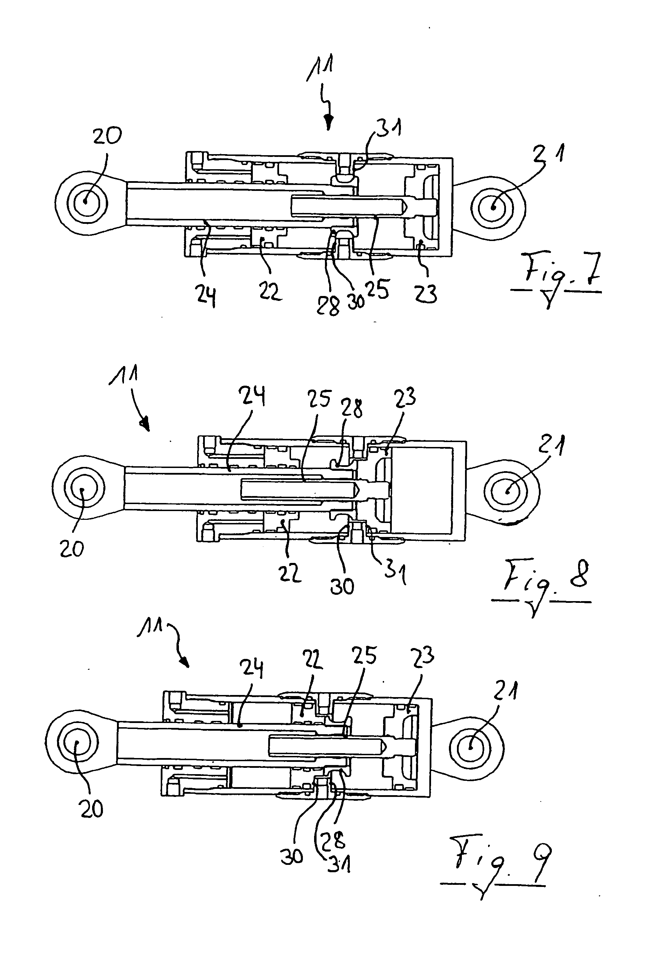

Der Stellzylinder 11 ist derart beaufschlagbar daß er aus einer die Bewegung der Querträger 16 und 15 gegeneinander ermöglichenden Schwimmstellung gemäß Figur 8 in eine blockierende Stellung bewegbar ist, in der die obere Ebene E2 in eine gegenüber der Fahrwerksebene E1 leicht um die Längsachse 19 überkippte Position verlagerbar ist, so daß der Fahrzeugaufbau 9 wie in Figur 1 eine verkippte Schrägstellung gegenüber der Fahrwerksebene E1 einnimmt. Die Verkippung ist gering, so daß in überkippter Position die obere Ebene E2 gegenüber der unteren Ebene E1 um höchstens 6° geneigt ist (je nach Toleranzen in den Bauteilen und Lagern). Durch Ausgreifen des Arbeitswerkzeugs 5 gelangt die obere Ebene E2 mit dem Fahrzeugaufbau 9 in eine horizontale Stellung, wie in Figur 2 dargestellt ist, in der die obere und untere Ebene E1 und E2 parallel stehen. Die Höhenverstellbarkeit des Drehpunkts 10 kann auf eine exakte Parallelausrichtung - Abweichung von insbesondere deutlich unter 1° oder besser - der Ebenen E1, E2 in der ausgreifenden Position nach Figur 2 ausgerichtet werden.

In Figur 7 ist die Schwimmstellung des Stellzylinders 11 dargestellt: Dabei ist die untere Lagerung 20 links und die obere Lagerung 21 rechts eingezeichnet. Der Zylinder wird nicht mit Druckmittel beaufschlagt, so daß der Aufbau 9 gegenüber dem Fahrwerk 8 frei federn und auch seitlich kippen kann, wie dies bei normaler Fahrt, in der der Ausleger 7 und das Arbeitswerkzeug 5 in Transportstellung gehalten sind, gewünscht ist.

Wie insbesondere aus den Figuren 7 bis 9 deutlich wird, enthält der Stellzylinder 11 einen unteren Kolben 22 und einen oberen Kolben 23, wobei der obere Kolben 23 mit seiner Kolbenstange 25 in der unteren Kolbenstange 24 geführt ist. Zudem sind eine untere Beaufschlagungsleitung 26 und eine obere Beaufschlagungsleitung 27 sowie ein verschiebbarer Mittenanschlag 28 im Stellzylinder 11 vorgesehen, der fest mit der unteren Kolbenstange 24 verbunden ist. Eine Leck- und Rücklaufleitung 29 kann zudem vorgesehen sein.

Die Leitungen 26, 27 sind über hier zwei Drei-Zwei-Wege-Ventile 32 ansteuerbar.

Im Übergang von Figur 7 zu Figur 9 ist durch Beaufschlagung über die untere Anschlußleitung 26 der untere Kolben 22 über eine mittlere Stellung hinaus in eine gegen den Anschlag 28 anschlagende und diesen über die Mitte hinausdrückende Verriegelungsstellung bewegbar, ehe der untere Kolben 22 selbst gegen einen festen Anschlag 30 anschlägt. Der Hubweg des Kolbens 22 ist dadurch begrenzt. Der obere und untere Querträger 15, 16 sind dann gegeneinander verriegelt.

Dadurch, daß der bewegliche Anschlag 28 fest mit der unteren Kolbenstange 24 verbunden ist, wird bei Anfahren des unteren Kolbens 22 gegen den Anschlag 28 und sein Hinausbewegen über die Mittenstellung die Kolbenstange 24 insgesamt eingezogen, so daß der Zylinder 11 in seinem Abstand zwischen den Lagern 20 und 21 verkürzt wird und die Verkippung der oberen Ebene E2 gemäß Figur 1 durch Zug nach unten bewirkt wird.

Umgekehrt ist im Übergang von Figur Im Übergang von Figur 7 zu Figur 8 durch Beaufschlagung über die obere Anschlußleitung 27 der obere Kolben 23 über eine mittlere Stellung hinaus in eine gegen den Anschlag 28 anschlagende und diesen über die Mitte nach unten hinausdrückende Verriegelungsstellung bewegbar, ehe der untere Kolben 23 selbst gegen einen festen Anschlag 31 anschlägt. Der Hubweg des Kolbens 23 ist dadurch ebenfalls begrenzt.

Dadurch, daß der bewegliche Anschlag 28 fest mit der unteren Kolbenstange 24 verbunden ist, wird bei dieser Beaufschlagung durch Anfahren des oberen Kolbens 23 gegen den Anschlag 28 und sein Hinausbewegen über die Mittenstellung die Kolbenstange 24 insgesamt ausgeschoben, so daß der Zylinder 11 in seinem Abstand zwischen den Lagern 20 und 21 verlängert wird und die Verkippung der oberen Ebene E2 gegenüber der unteren Ebene E1 entgegen Figur bewirkt würde, so daß auch der Aufbau 9 dann entgegengesetzt zu Figur 1 verkippt würde. Damit könnte auch einer Auslage des Auslegers 7 nach links eine Vorspannung entgegengesetzt werden, so daß auch dann der Aufbau 9 bei einseitiger Belastung nach links wieder in die Horizontale rückkippen würde. Hier ist nur die Auslage nach rechts dargestellt.

Hier ist somit die Kolbenstange 24 des Stellzylinders in Druck- wie in Zugrichtung über die mittlere Stellung hinaus bewegbar, so daß die Ebene E2 der Tragstruktur und des Aufbaus 9 gegenüber der Fahrwerksebene 8 in zwei Schwenksinnen leicht überkippbar ist. Sofern der Ausleger nur zu einer Seite ausgelegt werden soll, kann der Stellzylinder 11 auch einen einfacheren Aufbau mit nur einem Kolben haben.

In jedem Fall wird zur Ausrichtung des front- oder heckseitigen Anbaurahmens 2 und Arbeitswerkzeugs 5 zunächst bei noch in Transportstellung befindlichem Arbeitswerkzeug 5 der Stellzylinder 11 derart mit einer Vorspannung beaufschlagt, daß die obere Ebene E2 in eine gegenüber der Fahrwerksebene E1 leicht überkippte Position verlagert wird und erst durch Ausgreifen des Arbeitswerkzeugs 5 gegen die Material- und Lagertoleranzen zurück in eine parallele Stellung zur Fahrwerksebene E1 gelangt, die verriegelt ist und eine stabile Arbeitsstellung des Aufbaus 9 darstellt.

### Bezugszeichenliste:

- 1: Arbeitsfahrzeug,
- 2: Anbaurahmen,
- 3: Stützbereich des Anbaurahmens,
- 4: Tragbereich des Anbaurahmens,
- 5: Arbeitswerkzeug,
- 6: Führungsschienen,
- 7: Ausleger,
- 8: Fahrwerk,
- 9: Fahrzeugaufbau,
- 10: Drehpunkt,
- 11: Stellzylinder,
- 12: Querträger,
- 13: Flansch,
- 14: Torsionsrohr,
- 15: unterer Querträger,
- 16: oberer Querträger,
- 17: seitliche Flansche,
- 18: Riegel,
- 19: Drehachse,
- 20: untere Lagerung des Stellzylinders,
- 21: obere Lagerung des Stellzylinders,

- 22: unterer Kolben,
- 23: oberer Kolben,
- 24: untere Kolbenstange,
- 25: obere Kolbenstange,
- 26: untere Anschlußleitung,
- 27: obere Anschlußleitung,
- 28: beweglicher Anschlag
- 29: Leck- und Rücklaufleitung,
- 30: fester Anschlag,
- 31: fester Anschlag,
- 32: 3-2-Wege-Ventil,

- E1: untere Ebene,
- E2: obere Ebene,
- F: Fahrtrichtung

## Patentansprüche

1. Arbeitsfahrzeug (1) mit zumindest einem front- und/oder heckseitigen Anbaurahmen (2), an dem zumindest ein Arbeitswerkzeug (5), insbesondere ein seitlich ausgreifbares Arbeitswerkzeug (5), halterbar ist, wobei der Anbaurahmen (2) eine untere, gegenüber einem Fahrwerk (8) des Fahrzeugs halterbare Ebene (E1) und eine obere, gegenüber einer Tragstruktur für einen Aufbau (9) des Fahrzeugs (1) halterbare Ebene (E2) aufweist und wobei die obere (E2) und die untere Ebene (E1) gegeneinander an einem festen Drehpunkt (10) gehalten und über einen seitlich beabstandet zu diesem Drehpunkt (10) stehenden Stellzylinder (11) in ihrer Beweglichkeit gegeneinander blockierbar sind,
**dadurch gekennzeichnet,**
**daß** der Stellzylinder (11) derart beaufschlagbar ist, daß die obere Ebene (E2) in eine gegenüber der Fahrwerksebene (E1) leicht überkippte Position verlagerbar ist und erst durch Ausgreifen des Arbeitswerkzeugs (5) in eine parallele Stellung zur unteren Ebene (E1) gelangt.

2. Arbeitsfahrzeug (1) nach Anspruch 1,
**dadurch gekennzeichnet,**
**daß** in überkippter Position die obere Ebene (E2) gegenüber der unteren Ebene (E1) um höchstens 6° verkippt ist.

3. Arbeitsfahrzeug (1) nach einem der Ansprüche 1 oder 2,
**dadurch gekennzeichnet,**
**daß** die obere (E2) und die untere Ebene (E1) über einen Riegel (18) und einen seitlich neben diesen beabstandet stehenden Stellzylinder (11) gegeneinander bewegbar bzw. in ihrer Beweglichkeit gegeneinander blockierbar sind.

4. Arbeitsfahrzeug (1) nach einem der Ansprüche 1 bis 3,
**dadurch gekennzeichnet,**
**daß** die Höhenlage des festen Drehpunkts (10) einstellbar ist.

5. Arbeitsfahrzeug (1) nach den Ansprüchen 3 und 4,
**dadurch gekennzeichnet,**
**daß** die obere Anlenkung des Riegels (18) den Drehpunkt (10) der oberen (E2) gegen die untere Ebene (E1) bildet und der Riegel (18) ein Spannschloß oder eine ähnliche Längenverstellmöglichkeit enthält.

6. Arbeitsfahrzeug (1) nach einem der Ansprüche 1 bis 5,
**dadurch gekennzeichnet,**
**daß** ein Kolben (22;23) des Stellzylinders (11) über eine mittlere Stellung hinaus in eine Verriegelungsstellung bewegbar ist.

7. Arbeitsfahrzeug (1) nach Anspruch 6,
**dadurch gekennzeichnet,**
**daß** ein Kolben (22;23) des Stellzylinders (11) in Druck- wie in Zugrichtung über die mittlere Stellung hinaus bewegbar ist, so daß die Ebene (E2) der Tragstruktur gegenüber der Fahrwerksebene (E1) in zwei Schwenksinnen leicht überkippbar ist.

8. Arbeitsfahrzeug (1) nach einem der Ansprüche 6 oder 7,
**dadurch gekennzeichnet,**
**daß** der Stellzylinder (11) zwei Kolben (22;23) enthält, die jeweils gegen einen dazwischen liegenden, beweglichen Anschlag (28) fahrbar sind.

9. Arbeitsfahrzeug (1) nach Anspruch 8,
**dadurch gekennzeichnet,**
**daß** der bewegliche Anschlag (28) mit einer Kolbenstange (24) des Stellzylinders (11) fest verbunden ist.

10. Arbeitsfahrzeug (1) nach einem der Ansprüche 8 oder 9,
**dadurch gekennzeichnet,**
**daß** in überkippter Position einer der Kolben (22;23) gegen einen festen Anschlag (30;31) innerhalb des Zylinders (11) gefahren ist.

11. Verfahren zur Ausrichtung eines front- oder heckseitigen, an einem Anbaurahmen (2) beweglich gehaltenen Arbeitswerkzeugs (5), insbesondere eines seitlich ausgreifbaren Arbeitswerkzeugs (5), gegenüber dem Fahrwerk (8) eines den Anbaurahmen (2) tragenden Arbeitsfahrzeugs, wobei der Anbaurahmen (2) eine untere, gegenüber einem Fahrwerk des Fahrzeugs halterbare Ebene (E1) und eine obere, gegenüber einer Tragstruktur des Fahrzeugs halterbare Ebene (E2) aufweist und wobei die obere (E2) und die untere Ebene (E1) gegeneinander an einem festen Drehpunkt (10) gehalten und über einen seitlich neben beabstandet zu diesem Drehpunkt (10) stehenden Stellzylinder (11) in ihrer Beweglichkeit gegeneinander blockierbar sind,
**dadurch gekennzeichnet,**
**daß** zur Ausrichtung bei noch in Transportstellung befindlichem Arbeitswerkzeug (5) der Stellzylinder (11) derart mit einer Vorspannung beaufschlagt wird, daß die obere Ebene (E2) in eine gegenüber der Fahrwerksebene (E1) leicht überkippte Position verlagert wird und erst durch Ausgreifen des Arbeitswerkzeugs (5) zurück in eine parallele Stellung gelangt.

## Claims

1. A work vehicle (1) with at least one mounting frame (2) on the front and/or rear side, on which at least one working tool (5), in particular a laterally extendable working tool (5), is able to be mounted, wherein the mounting frame (2) has a lower level (E1) able to be mounted with respect to a chassis (8) of the vehicle, and an upper level (E2) able to mounted with respect to a supporting structure for a superstructure (9) of the vehicle (1), and wherein the upper level (E2) and the lower level (E1) are held relative to one another at a fixed rotation point (10) and are able to be blocked in their mobility relative to one another via an adjusting cylinder (11) which is spaced apart laterally with respect to this rotation point (10),
**characterized in that**
the adjusting cylinder (11) is able to be acted upon such that the upper level (E2) is able to be displaced into a slightly tilted position with respect to the chassis level (E1), and only arrives into a parallel position with respect to the lower level (E1) by extension of the working tool (5).

2. The work vehicle (1) according to Claim 1, **characterized in that** in tilted position, the upper level (E2) is tilted by a maximum of 6° with respect to the lower level (E2).

3. The work vehicle (1) according to one of Claims 1 or 2, **characterized in that** the upper level (E2) and the lower level (E1) are movable relative to one another via a bar (18) and an adjusting cylinder (11) spaced apart laterally adjacent thereto, or respectively able to be blocked in their mobility relative to one another.

4. The work vehicle (1) according to one of Claims 1 to 3, **characterized in that** the vertical position of the fixed rotation point (10) is adjustable.

5. The work vehicle (1) according to Claims 3 and 4, **characterized in that** the upper articulation of the bar (18) forms the rotation point (10) of the upper level (E2) relative to the lower level (E1), and the bar (18) contains a turnbuckle or a similar possibility for length adjustment.

6. The work vehicle (1) according to one of Claims 1 to 5, **characterized in that** a piston (22; 23) of the adjusting cylinder (11) is movable beyond a central position into a locking position.

7. The work vehicle (1) according to Claim 6, **characterized in that** a piston (22; 23) of the adjusting cylinder (11) is movable in the pressure direction and in the drawing direction beyond the central position, so that the level (E2) of the supporting structure is able to be slightly tilted in two pivoting directions with respect to the chassis level (E1).

8. The work vehicle (1) according to one of Claims 6 or 7, **characterized in that** the adjusting cylinder (11) contains two pistons (22; 23), which are movable respectively against a movable stop (28) lying therebetween.

9. The work vehicle (1) according to Claim 8, **characterized in that** the movable stop (28) is securely connected with a piston rod (24) of the adjusting cylinder (11).

10. The work vehicle (1) according to one of Claims 8 or 9, **characterized in that** in tilted position, one of the pistons (22; 23) is moved against a fixed stop (30; 31) within the cylinder (11).

11. A method for the alignment of a front-side or rearside working tool (5), held movably on a mounting frame (2), in particular of a laterally extendable working tool (5), with respect to the chassis (8) of a work vehicle carrying the mounting frame (2), wherein the mounting frame (2) has a lower level (E1) able to be mounted with respect to a chassis of the vehicle, and an upper level (E2) able to be mounted with respect to a supporting structure of the vehicle, and wherein the upper level (E2) and the lower level (E1) are held relative to one another at a fixed rotation point (10) and are able to be blocked in their mobility relative to one another via an adjusting cylinder (11) which is situated laterally adjacent spaced apart with respect to this rotation point (10),
**characterized in that**
for the alignment with the working tool (5) still being situated in transport position, the adjusting cylinder (11) is acted upon by a pre-stressing such that the upper level (E2) is displaced into a slightly tilted position with respect to the chassis level (E1), and arrives back into a parallel position only by extending of the working tool (5).

## Revendications

1. Véhicule de travail (1) comportant au moins un cadre de montage (2) du côté avant et/ou du côté arrière, sur lequel au moins un outil de travail (5), notamment un outil de travail (5) pouvant être étendu latéralement, peut être maintenu, dans lequel le cadre de montage (2) présente un plan (E1) inférieur, pouvant être maintenu par rapport à un train de roulement (8) du véhicule et un plan (E2) supérieur, pouvant être maintenu par rapport à une structure porteuse en vue d'un montage (9) du véhicule (1) et dans lequel le plan supérieur (E2) et le plan inférieur (E1) sont maintenus l'un contre l'autre sur un point de rotation (10) fixe et peuvent être bloqués l'un contre l'autre dans leur mobilité par l'intermédiaire d'un vérin de réglage (11) se trouvant latéralement espacé de ce point de rotation (10), **caractérisé en ce que** le vérin de réglage (11) peut être sollicité de telle sorte que le plan supérieur (E2) puisse être déplacé dans une position légèrement basculée en arrière par rapport au plan de train de roulement (E1) et parvienne seulement par extension de l'outil de travail (5) dans une position parallèle au plan inférieur (E1).

2. Véhicule de travail (1) selon la revendication 1, **caractérisé en ce que** dans la position basculée en arrière le plan supérieur (E2) est basculé d'au maximum 6° par rapport au plan inférieur (E1).

3. Véhicule de travail (1) selon une des revendications 1 ou 2, **caractérisé en ce que** le plan supérieur (E2) et le plan inférieur (E1) sont déplaçables l'un contre l'autre par l'intermédiaire d'un pêne (18) et d'un vérin de réglage (11) se trouvant espacé latéralement à côté de celui-ci, respectivement peuvent être bloqués l'un contre l'autre dans leur mobilité.

4. Véhicule de travail (1) selon une des revendications 1 à 3, **caractérisé en ce que** la position en hauteur du point de rotation fixe (10) peut être ajustée.

5. Véhicule de travail (1) selon les revendications 3 et 4, **caractérisé en ce que** l'articulation supérieure du pêne (18) forme le point de rotation (10) du plan supérieur (E2) contre le plan inférieur (E1) et le pêne (18) contient un tendeur ou une possibilité d'ajustement de longueur similaire.

6. Véhicule de travail (1) selon une des revendications 1 à 5, **caractérisé en ce que** un piston (22 ; 23) du vérin de réglage (11) peut être déplacé via une position centrale dans une position de verrouillage.

7. Véhicule de travail (1) selon la revendication 6, **caractérisé en ce que** un piston (22 ; 23) du vérin de réglage (11) est déplaçable dans la direction de poussée comme de traction en passant par la position centrale, de sorte que le plan (E2) de la structure porteuse puisse être légèrement basculé en arrière par rapport au plan de train de roulement (E1) dans deux directions de pivotement.

8. Véhicule de travail (1) selon une des revendications 6 ou 7, **caractérisé en ce que** le vérin de réglage (11) contient deux pistons (22 ; 23), qui peuvent rouler respectivement contre une butée (28) mobile, située entre eux.

9. Véhicule de travail (1) selon la revendication 8, **caractérisé en ce que** la butée mobile (28) est reliée solidement à une tige de piston (24) du vérin de réglage (11).

10. Véhicule de travail (1) selon une des revendications 8 ou 9, **caractérisé en ce que** en position basculée vers l'arrière, un des pistons (22 ; 23) est amené à rouler contre une butée fixe (30 ; 31) à l'intérieur du cylindre (11).

11. Procédé d'alignement d'un outil de travail (5) maintenu de manière mobile du côté avant ou du côté arrière sur un cadre de montage (2), notamment d'un outil de travail (5) pouvant être étendu latéralement, par rapport au train de roulement (8) d'un outil de travail supportant le cadre de montage (2), dans lequel le cadre de montage (2) présente un plan inférieur (E1), pouvant être maintenu par rapport à un train de roulement du véhicule et un plan supérieur (E2), pouvant être maintenu par rapport à une structure porteuse du véhicule et dans lequel le plan supérieur (E2) et le plan supérieur (E1) sont maintenus l'un contre l'autre sur un point de rotation fixe (10) et peuvent être bloqués l'un contre l'autre dans leur mobilité, par l'intermédiaire d'un vérin de réglage (11) se trouvant à côté latéralement espacé de son point de rotation (10), **caractérisé en ce que** à des fins d'alignement sur un outil de travail (5) se trouvant encore dans la position de transport, le vérin de réglage (11) est sollicité avec une précontrainte de telle sorte que le plan supérieur (E2) soit déplacé dans une position légèrement basculée vers l'arrière par rapport au plan de train de roulement (E1) et revienne dans une position parallèle seulement par extension de l'outil de travail (5).
